# EUROPEAN PATENT APPLICATION

(11) **EP 4 442 572 A1**
(43) Date of publication of application: **09.10.2024**
(21) Application number: 22899096.6
(22) Date of filing: 25.11.2022
(51) Int. Cl.: B64D 25/00, B64C 39/02, B64C 25/56, B64D 45/00

(54) **REUSABLE AIRBAG INFLATOR**

(30) Priority: 29.11.2021 KR 20210167623; 22.11.2022 KR 20220157622
(71) Applicant: Safeware Inc, Seongnam-si, Gyeonggi-do 13449 (KR)
(72) Inventor: SHIN, Hwan Chol, Seongnam-si Gyeonggi-do 13449 (KR)
(74) Representative: Studio Torta S.p.A.
(86) International application number: PCT/KR2022/018879
(87) International publication number: WO 2023/096414

(57) **Abstract**

Provided is a reusable airbag inflator including a gas cartridge mounted with an opening or closing valve capable of being opened or closed to discharge a compression gas stored therein, a driving portion for opening or closing the opening or closing valve, and an opening or closing body including a first coupling hole where the opening or closing valve is installed, a second coupling hole where the driving portion is installed, a discharge hole through which the compression gas is discharged to an airbag, and a body cavity connecting the first coupling hole, the second coupling hole, and the discharge hole, wherein the opening or closing valve is a check valve that is opened when external force greater than internal pressure of the gas cartridge is received and closed when the external force is removed.

## Description

### Background Art

Airbags may be used to protect objects or people from collisions, falls, drops, or the like.

Recently, with an increase in attempts to use drones commercially, such as for military, for agriculture, for transportation, for shooting, and the like, damages caused by drone accidents have increased. To prevent casualties, property accidents, equipment losses, and the like, which may occur from crashes of drones, airbag are installed in the drones to minimize damage.

Also, there are increasing cases of wearing airbags to protect workers who may be injured due to accidents, such as collisions, falls, and the like, which occur in industrial sites.

A general airbag includes an inflator to expand an airbag by supplying a gas. A general inflator includes a sealed gas cartridge and an opening or closing portion that perforates the sealed gas cartridge with a puncture pin to open the sealed gas cartridge.

However, in the related art, a method of perforating a gas cartridge by using a puncture pin is for one time use only, and the perforated gas cartridge is unable to be reused.

### Prior Art Documents

### Patent Documents

### (Patent Document 1) KR 10-1577067 (Inflator for Protective Gear)

### Disclosure

### Technical Problem

Provided is an inflator that is reusable by changing a sealing type gas cartridge to a valve type.

Also, provided is an inflator that is directly coupled to an airbag to directly supply a compression gas.

### Technical Solution

A reusable airbag inflator includes a gas cartridge mounted with an opening or closing valve capable of being opened or closed to discharge a compression gas stored therein, a driving portion for opening or closing the opening or closing valve, and an opening or closing body including a first coupling hole where the opening or closing valve is installed, a second coupling hole where the driving portion is installed, a discharge hole through which the compression gas is discharged to an airbag, and a body cavity connecting the first coupling hole, the second coupling hole, and the discharge hole, wherein the opening or closing valve is a check valve that is opened when external force greater than internal pressure of the gas cartridge is received and closed when the external force is removed.

The opening or closing valve may be detachably installed in the gas cartridge and the opening or closing body.

The driving portion may be detachably installed in the opening or closing body.

The reusable airbag inflator may further include a fixing body that includes a fixing body discharge hole communicating with the discharge hole and is combinable to the opening or closing body, wherein the airbag may be installed between the opening or closing body and the fixing body or installed in the fixing body to communicate with the discharge hole and the fixing body discharge hole.

The external force applied to the opening or closing valve may be generated by a piston extractable from the driving portion.

The first coupling hole and the second coupling hole may be arranged to face each other, and the discharge hole may be arranged between the first coupling hole and the second coupling hole.

### Advantageous Effects

A reusable airbag inflator according to an embodiment of the present disclosure provides an effect in which, by changing a gas cartridge from a sealing type to an opening or closing valve (check valve) type, even a used gas cartridge can be reused by filling a gas again.

Also, a reusable airbag inflator according to an embodiment of the present disclosure provides an effect in which the inflator can be reused by providing an opening or closing valve (shredder valve) and a driving portion (gunpowder driving portion) to be replaceable in an opening or closing portion (opening or closing body).

### Description of Drawings

FIG. 1 illustrates a drone installed with an airbag.
FIG. 2 illustrates a drone structure in which an airbag is installable.
FIGS. 3A and 3B illustrate a body protection device installed with an airbag.
FIGS. 4A and 4B are cross-sectional views of a body protection device installed with an airbag.
FIG. 5 is a block diagram of components of a drone or body protection device installed with an airbag.
FIG. 6 is a perspective view of a reusable airbag inflator according to an embodiment of the present disclosure.
FIGS. 7A to 7E are perspective views of an opening or closing body according to various embodiments of the present disclosure.
FIG. 8 is a perspective view of an opening or closing valve according to an embodiment of the present disclosure.
FIGS. 9 and 10 are cross-sectional views of a reusable airbag inflator according to an embodiment of the present disclosure.
FIGS. 11 and 12 are perspective views of a reusable airbag inflator according to another embodiment of the present disclosure.
FIG. 13 is a cross-sectional view of a reusable airbag inflator according to another embodiment of the present disclosure.
FIG. 14 is an exploded cross-sectional view of a reusable airbag inflator according to another embodiment of the present disclosure.
FIG. 15 is a perspective view of a reusable airbag inflator according to another embodiment of the present disclosure.
FIG. 16 illustrates a state of assembling a reusable airbag inflator according to another embodiment of the present disclosure.
FIG. 17 is a cross-sectional view of a reusable airbag inflator according to another embodiment of the present disclosure.

### Mode for Invention

Specific structural or functional descriptions of embodiments according to the concept of the present disclosure described in the present specification are only for purposes of describing the embodiments, and the embodiments according to the concept of the present disclosure may vary and are not limited to those described in the present disclosure.

The embodiments according to the concept of the present disclosure may have various changes and forms, and thus, the embodiments will be illustrated in drawings and described in detail in the present specification. However, this is not intended to limit the embodiments according to the concept of the present disclosure to particular modes of practice, and all changes, equivalents, and substitutes that do not depart from the spirit and technical scope of the present disclosure are encompassed in the present disclosure.

While such terms as "first", "second", etc., may be used to describe various components, such components are not limited to the above terms. The terms are used only to distinguish one component from another component, and for example, a first component may be referred to as a second component and similarly, a second component may be referred to as a first component without departing from the scope of right according to the concept of the present disclosure.

When a component is "connected" or "accessed" to another component, the component may be directly connected or accessed to the other component, but it may also be understood that there may be an intervening component therebetween. On the other hand, when a component is "directly connected" or "directly accessed" to another component, it may be understood that there is no intervening component therebetween. Other expressions describing a relationship between components, i.e., "between", "immediately between", "adjacent to" and "directly adjacent to", may be interpreted in a same manner.

Also, the technical terms used in the present specification are only used to describe specific embodiments, and are not intended to limit the present disclosure. An expression used in the singular encompasses the expression in the plural, unless it has a clearly different meaning in the context. In the present specification, it is to be understood that terms such as "including" or "having", etc., are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

Unless defined otherwise, all terms used herein including technical or scientific terms have the same meanings as generally understood by one of ordinary skill in the art, unless specifically defined in different meanings in the present specification. Terms that are defined in commonly used dictionaries should be interpreted as having meanings consistent with those in the context of the related art, and should not be interpreted in ideal or excessively formal meanings unless clearly defined in the present specification.

Suffixes "module" and "unit (-er/or)" for components, used in the present specification, are assigned or used considering only the easiness of preparing the present specification, and do not have meanings or roles for distinguishing each other by themselves. The suffixes may indicate hardware for performing a method according to an embodiment of the present disclosure or a functional or structural combination of software for driving the hardware.

Hereinafter, a reusable airbag inflator according to an embodiment of the present disclosure will be described with reference to accompanying drawings.

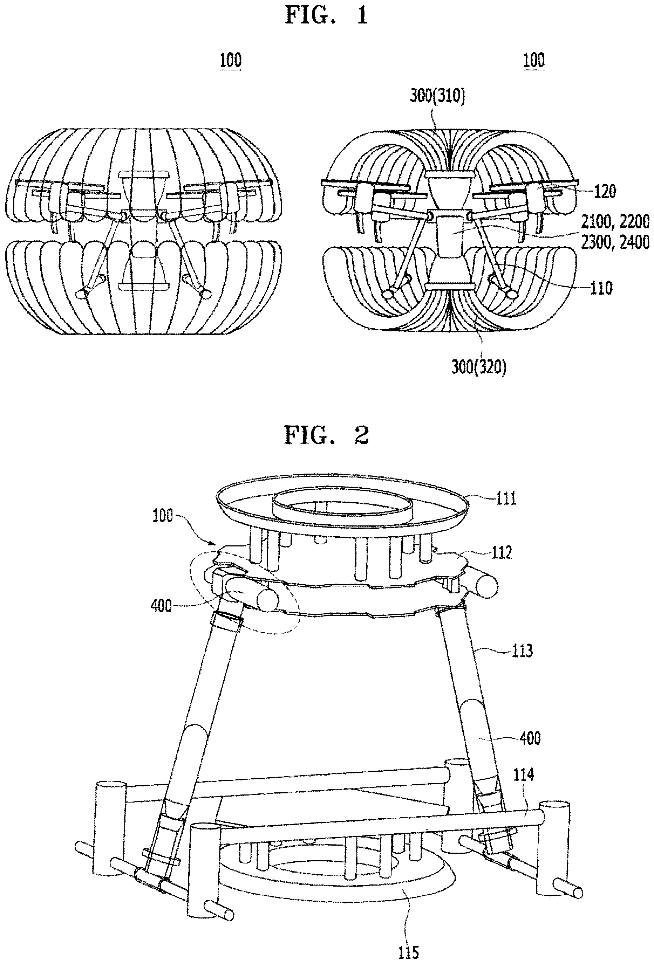

FIG. 1 illustrates a drone installed with an airbag. FIG. 2 illustrates a drone structure in which an airbag is installable.

Referring to FIGS. 1 and 2, a drone 100 may include a drone structure 110, a flight unit 120 installed in the drone structure 110, an airbag 300 installed in the drone structure 110, and a reusable airbag inflator 400.

The drone structure 110 includes a structure upper body 112, a structure lower body 114, and a structure connecting body 113 connecting the structure upper body 112 and the structure lower body 114 to each other. The inflator 400 may be installed at an outer side or an inner side of at least one of the structure upper body 112, the structure lower body 114, and the structure connecting body 113. The inflator 400 may be installed in cavities formed inside the structure upper body 112, the structure lower body 114, and the structure connecting body 113.

The drone structure 110 may further include an upper drone airbag support portion 111 installed with an upper drone airbag 310 and combined to the structure upper body 112, and a lower drone airbag support portion 115 installed with a lower drone airbag 320 and combined to the structure lower body 114.

The upper drone airbag 310 and the lower drone airbag 320 may expand to protect an upper outer side, a lower side, and a side surface of the drone 100.

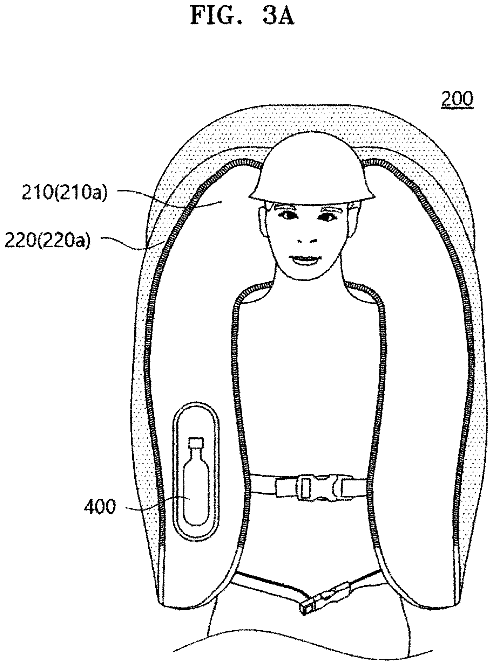

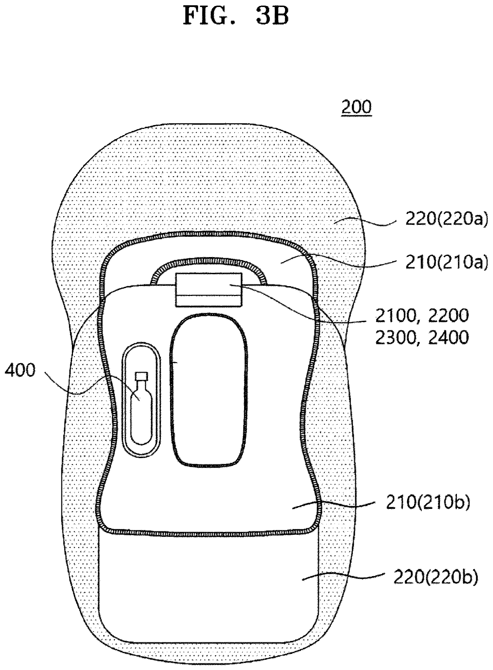

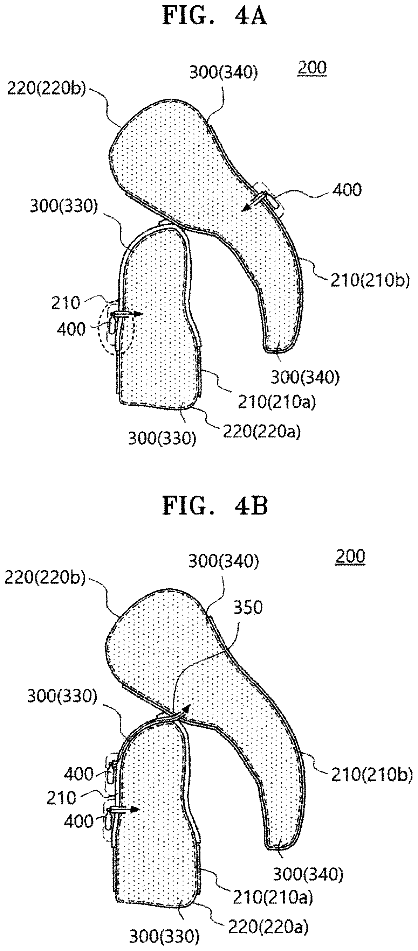

FIGS. 3A and 3B illustrate a body protection device installed with an airbag. FIGS. 4A and 4B are cross-sectional views of a body protection device installed with an airbag.

Referring to FIGS. 3A to 4B, a body protection device 200 may include outer covers 210 and 220 for a user to put on his/her body, the airbag 300 that may expand by a compression gas of a gas cartridge 410, and the inflator 400 for supplying the compression gas to the airbag 300.

The outer covers 210 and 220 form an outer appearance of the body protection device 200, and have any outer shape, such as clothing, a harness, or a belt. The outer covers 210 and 220 may include a fixed portion 210 that forms the outer appearance of the body protection device 200 before the airbag 300 expands, and an extending portion 220 that is located inside the fixed portion 210 before the airbag 300 expands, but is exposed to the outside of a first outer cover 220 after the airbag 300 expands to extends an inner space formed by the outer covers 210 and 220.

The airbag 300 may be provided inside the outer covers 210 and 220, located in an inner space formed by the fixed portion 210 and the extending portion 220, and fixed to an inner surface of the outer covers 210 and 220.

The airbag 300 may expand by receiving the compression gas of the gas cartridge 410 when the inflator 400 operates. The expanded airbag 300 may expand the outer covers 210 and 220 as the expanded airbag 300 is located only inside the outer covers 210 and 220.

According to various embodiments, the expanded airbag 300 may expand by being exposed to the outside of the outer covers 210 and 220. In this case, the outer covers 210 and 220 may include a quick burst zipper or a Velcro binding portion for the expanded airbag 300 to be exposed to the outside.

The airbag 300 includes a gas accommodating space to which a gas is supplied, and the gas accommodating space may form a closed space.

The outer covers 210 and 220 and the airbag 300 may include first outer covers 210a and 220a and a first airbag 330, which protect the head, neck, shoulder, and a front portion of an upper body (chest and stomach) of the user, and second outer covers 210b and 220b and a second airbag 340, which protect a rear portion of the upper body (back and buttocks) of the user.

The first and second airbags 330 and 340 may be respectively provided in inner spaces of the first and second outer covers 210a and 220a, and 210b and 220b, and may be expanded inside or expanded by being exposed to the outside of the first and second outer covers 210a and 220a, and 210b and 220b.

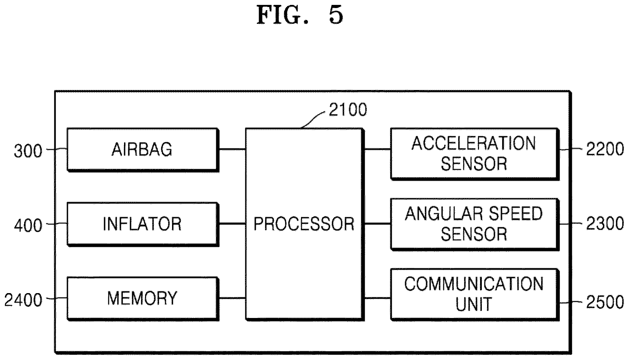

FIG. 5 is a block diagram of components of a drone or body protection device installed with an airbag.

Referring to FIG. 5, the drone 100 or the body protection device 200, according to an embodiment of the present disclosure, may include the airbag 300, the inflator 400, a processor 2100, an acceleration sensor 2200, an angular speed sensor 2300, a memory 2400, and a communication unit 2500. However, not all components are essential components of the drone 100 or the body protection device 200, and the drone 100 or the body protection device 200 may include more or fewer components.

The processor 2100 may be electrically connected to the inflator 400, the acceleration sensor 2200, the angular speed sensor 2300, the memory 2400, and the communication unit 2500, and may transmit or receive a data signal to or from each component, process data, and control each component.

The processor 2100 may receive data sensed by at least one of the acceleration sensor 2200 and the angular speed sensor 2300, process sensing data, based on an airbag expansion determination program stored in the memory 2400 or determine whether airbag expansion is required based on the sensing data, and transmit an airbag expansion signal to the inflator 400.

The inflator 400 may open an opening or closing valve described below by the received airbag expansion signal to supply the compression gas stored in the gas cartridge 410 to the airbag 300.

One or a plurality of the airbags 300 may be provided to protect various regions of the drone 100 or a human body. The airbag 300 may be expanded as a gas is directly injected to the airbag 300. The airbag 300 is a space into which the gas is injected, and thus, the compression gas discharged from the gas cartridge 410 may be filled in the airbag 300. Accordingly, the airbag 300 may soften an impact during a fall of the drone 100 or the user to prevent damage to the drone 100 or injury to the human body.

The acceleration sensor 2200 may measure and obtain an acceleration of the drone100 or the human body. In detail, the acceleration sensor 2200 may measure and obtain x-axis, y-axis, and z-axis accelerations of the drone 100 or the human body.

The angular speed sensor 2300 may measure and obtain an angular speed of the drone 100 or the human body. In detail, the angular speed sensor 2300 may measure and obtain pitch, roll, and yaw angular speeds of the drone 100 or the human body.

When the airbag 300 expands, the communication unit 2500 may transmit the airbag expansion signal or a signal about a fall/collision/drop of the drone 100 or the user to the outside.

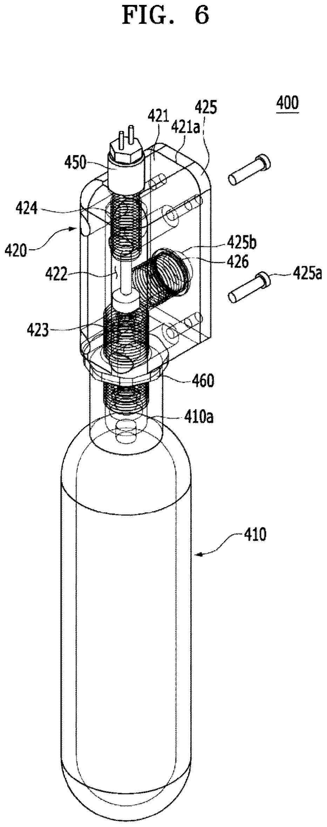

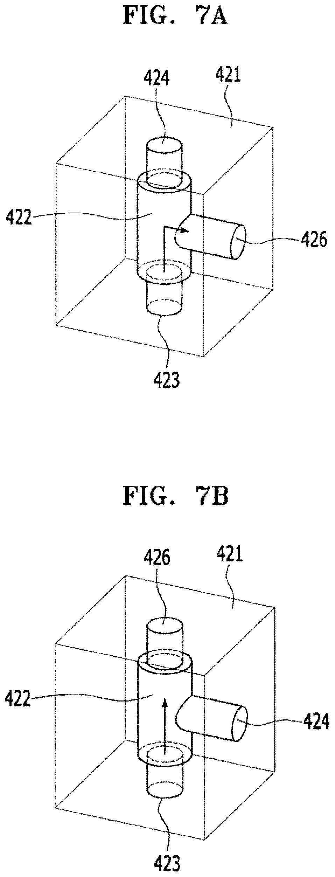

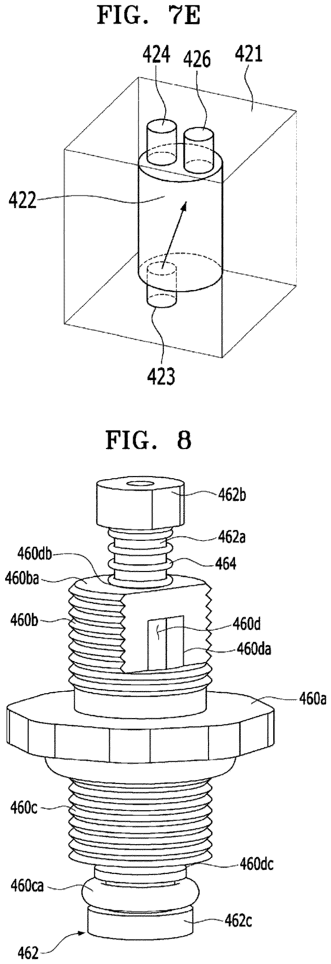

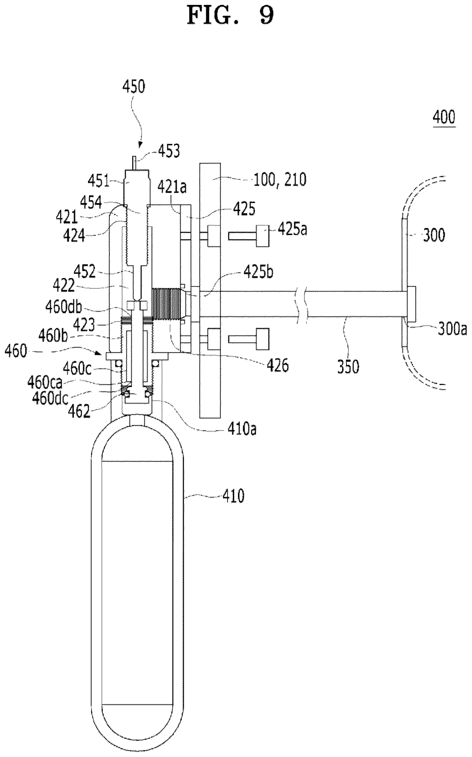

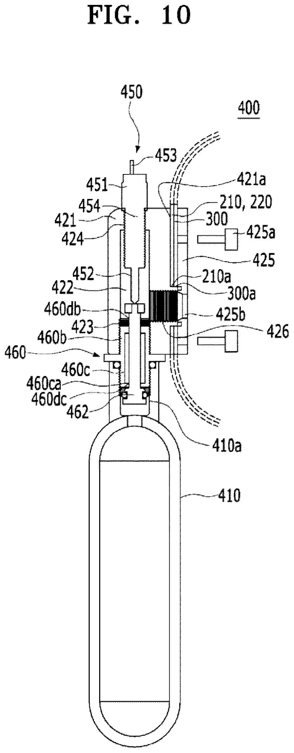

FIG. 6 is a perspective view of a reusable airbag inflator according to an embodiment of the present disclosure. FIGS. 7A to 7E are perspective views of an opening or closing body according to various embodiments of the present disclosure. FIG. 8 is a perspective view of an opening or closing valve according to an embodiment of the present disclosure. FIGS. 9 and 10 are cross-sectional views of a reusable airbag inflator according to an embodiment of the present disclosure.

Referring to FIG. 6, the reusable airbag inflator 400 according to an embodiment of the present disclosure is a device that operates upon receiving an airbag expansion signal to open the gas cartridge 410 and supply the compression gas inside the gas cartridge 410 to the airbag 300.

The reusable airbag inflator 400 according to an embodiment of the present disclosure may include the gas cartridge 410 and an opening or closing portion 420 that opens the gas cartridge 410.

The gas cartridge 410 may store therein the compression gas consisting of carbon dioxide, nitrogen, oxygen, or a combination of two or more thereof, and compressed with high pressure. The gas cartridge 410 may be detachably combined to the opening or closing portion 420, and opened or closed according to an operation of the opening or closing portion 420. When the gas cartridge 410 is opened by the opening or closing portion 420, the compression gas of the gas cartridge 410 may be supplied to the airbag 300 and expand the airbag 300.

The gas cartridge 410 may include a cartridge opening hole 410a opened at one side.

The opening or closing portion 420 may open or close the gas cartridge 410 according to the airbag expansion signal to supply the compression gas to the airbag 300.

The opening or closing portion 420 may include an opening or closing body 421, a body cavity 422, a first coupling hole 423, a second coupling hole 424, and a discharge hole 426.

The opening or closing body 421 may form an outer appearance of the opening or closing portion 420. The opening or closing body 421 may be formed of a metal material or a reinforced plastic material to prevent the opening or closing body 421 from being damaged by a high-pressure gas of the gas cartridge 410.

The opening or closing body 421 may have an outer appearance elongated in an up-and-down direction, and have a shape of a curved surface at one side, a shape of a perpendicular flat surface at both sides of the curved surface, and a fixing body combining surface 421a flat from an end portion of the flat surface at both sides to another side.

The opening or closing body 421 may be combined to the fixing body 425. According to various embodiments, the opening or closing body 421 may have the flat fixing body combining surface 421a, and the fixing body 425 may be fixed and combined to the fixing body combining surface 421a by using a fixing member 425a. The fixing body 425 may be configured as a plate rectangular parallelepiped.

The fixing body combining surface 421a may be provided at one surface of the opening or closing body 421 where the discharge hole 426 is formed. The fixing body 425 may be fixed and combined to one surface of the opening or closing body 421 where the discharge hole 426 is formed. The fixing body 425 may include a fixing body discharge hole 425b communicating with the discharge hole 426.

The body cavity 422 may be formed inside the opening or closing body 421. The body cavity 422 may communicate with the first coupling hole 423. The body cavity 422 may communicate with the second coupling hole 424. The body cavity 422 may communicate with the discharge hole 426. At least two of the first coupling hole 423, the second coupling hole 424, and the discharge hole 426 may be connected to each other by the body cavity 422.

The body cavity 422 may allow the first coupling hole 423 and the second coupling hole 424, which face each other, to communicate with each other. Also, the discharge hole 426 may be connected to the body cavity 422 located between the first coupling hole 423 and the second coupling hole 424.

The body cavity 422 may penetrate the opening or closing body 421 in one direction, an opening at one side of the body cavity 422 is the first coupling hole 423, an opening at another side is the second coupling hole 424, and the discharge hole 426 may penetrate a side surface of an inner circumference of the body cavity 422. However, a structure of the opening or closing body 410 including the body cavity 422, the first coupling hole 423, the second coupling hole 424, and the discharge hole 426 is not limited thereto.

Referring to FIG. 7A, according to various embodiments, the first coupling hole 423 may be formed at a lower portion (lower surface) of the opening or closing body 421, the second coupling hole 424 may be formed at an upper portion (upper surface) of the opening or closing body 421, the discharge hole 426 may be formed at one side portion (one side surface) of the opening or closing body 421, and the body cavity 422 may connect the first coupling hole 423, the second coupling hole 424, and the discharge hole 426 to communicate with each other inside the opening or closing body 421.

Referring to FIG. 7B, according to various embodiments, the first coupling hole 423 may be formed at a lower portion (lower surface) of the opening or closing body 421, the second coupling hole 424 may be formed at one side portion (one side surface) of the opening or closing body 421, the discharge hole 426 may be formed at an upper portion (upper surface) of the opening or closing body 421, and the body cavity 422 may connect the first coupling hole 423, the second coupling hole 424, and the discharge hole 426 to communicate with each other inside the opening or closing body 421.

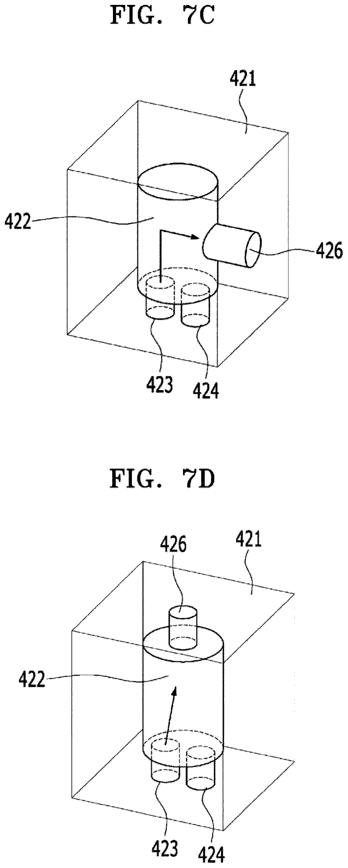

Referring to FIG. 7C, according to various embodiments, the first coupling hole 423 and the second coupling hole 424 may be formed at a lower portion (lower surface) of the opening or closing body 421, the discharge hole 426 may be formed at one side portion (one side surface) of the opening or closing body 421, and the body cavity 422 may connect the first coupling hole 423, the second coupling hole 424, and the discharge hole 426 to communicate with each other inside the opening or closing body 421.

Referring to FIG. 7D, according to various embodiments, the first coupling hole 423 and the second coupling hole 424 may be formed at a lower portion (lower surface) of the opening or closing body 421, the discharge hole 426 may be formed at an upper portion (upper surface) of the opening or closing body 421, and the body cavity 422 may connect the first coupling hole 423, the second coupling hole 424, and the discharge hole 426 to communicate with each other inside the opening or closing body 421.

Referring to FIG. 7E, according to various embodiments, the first coupling hole 423 may be formed at a lower portion (lower surface) of the opening or closing body 421, the second coupling hole 424 may be formed at an upper portion (upper surface) of the opening or closing body 421, the discharge hole 426 may be formed at the upper portion (upper surface) of the opening or closing body 421, and the body cavity 422 may connect the first coupling hole 423, the second coupling hole 424, and the discharge hole 426 to communicate with each other inside the opening or closing body 421.

As shown in FIGS. 7A to 7E, by variously configuring arrangements of the first coupling hole 423, the second coupling hole 424, and the discharge hole 426 included in the opening or closing body 421, a flow of the compression gas passing inside the body cavity 422 of the present disclosure may be facilitated, and locations of the gas cartridge 410 installed in the first coupling hole 423 and a driving portion 450 installed in the second coupling hole 424 may be variously changed considering an entire shape and volume of the inflator 400.

In other words, according to locations of the first coupling hole 423 and the second coupling hole 424 of the opening or closing body 421, the gas cartridge 410 and the driving portion 450 may be placed on a straight line with the opening or closing body 421 therebetween, placed parallel and adjacent to each other, or placed to have an angle (e.g., a right angle).

The reusable airbag inflator 400 according to an embodiment of the present disclosure may include an opening or closing valve 460 provided between the gas cartridge 410 and the opening or closing portion 420, and the driving portion 450 for opening or closing the opening or closing valve 460.

The opening or closing valve 460 may be detachably or integrally combined to the opening or closing body 421. Also, the opening or closing valve 460 may be detachably or integrally combined to the gas cartridge 410. In other words, the opening or closing body 421 may be combined to one end of the opening or closing valve 460 and the gas cartridge 410 may be combined to the other end of the opening or closing valve 460.

The opening or closing valve 460 may be combined by being inserted into the first coupling hole 423 of the opening or closing body 421. Also, the opening or closing valve 460 may be combined by being inserted into the cartridge opening hole 410a of the gas cartridge 410. The opening or closing valve 460 may be combined to the first coupling hole 423 or the cartridge opening hole 410a through various methods, such as a screw, welding, and an adhesive.

Referring to FIG. 8, the opening or closing valve 460 may be a check valve, for example, a shredder valve. The opening or closing valve 460 may be a check valve that is opened when external force greater than pressure inside the gas cartridge 410 is received inside the gas cartridge 410 to externally discharge the compression gas, and is closed when the external force is removed to store the compression gas.

The opening or closing valve 460 includes a valve body, and the valve body may include a valve body extending portion 460a, a first insertion portion 460b extending upward from the valve body extending portion 460a to be combined to the first coupling hole 423, and a second insertion portion 460c extending downward from the valve body extending portion 460a to be combined to the cartridge opening hole 410a.

The valve body extending portion 460a may protrude in a horizontal direction with a diameter greater than the first insertion portion 460b and second insertion portion 460c. Accordingly, when the first insertion portion 460b and the second insertion portion 460c are respectively combined to the first coupling hole 423 and the cartridge opening hole 410a, the opening or closing body 421 and the gas cartridge 410 may be spaced apart from each other without being in contact, by the valve body extending portion 460a.

Also, the opening or closing valve 460 may include a valve through hole 460d penetrating the valve body, a valve pin 462 opening or closing the valve through hole 460d, and a valve spring 464 providing elastic restoring force to the valve pin 462.

The valve through hole 460d extends in a vertical direction to penetrate both the first insertion portion 460b extending upward and the second insertion portion 460c extending downward. Also, the valve through hole 460d is connected to a valve discharge hole 460da formed at a side surface of the first insertion portion 460b. There may be two valve discharge holes 460da facing the first insertion portion 460b.

Also, the valve through hole 460d is formed at an upper portion (upper surface) of the first insertion portion 460b and is connected to a valve upper hole 460db penetrated by one end of the valve pin 462. Also, the valve through hole 460d is formed at a lower portion (lower surface) of the second insertion portion 460b, and is connected to a valve lower hole 460dc penetrated by another end of the valve pin 462.

The valve pin 462 penetrates all of the valve upper hole 460db, the valve through hole 460d, and the valve lower hole 460dc, and is provided to be movable in the valve upper hole 460db, the valve through hole 460d, and the valve lower hole 460dc. The valve pin 462 may close the valve through hole 460d by closing the valve lower hole 460dc before receiving external force, and open the valve lower hole 460dc and the valve through hole 460d by moving downward by receiving external force.

The valve pin 462 may include a valve pin rod 462a penetrating the valve upper hole 460db, the valve through hole 460d, and the valve lower hole 460dc, a first valve pin extended portion 462c provided below the valve pin rod 462a, and a second valve pin extended portion 462b provided above the valve pin rod 462b.

The first valve pin extended portion 462c may be detachably combined to or integrally formed with the valve pin rod 462a, have a greater diameter than the valve pin rod 462a, and open or close the valve lower hole 460dc at an outer side of the valve body. In addition, the first valve pin extended portion 462c may include a sealing member 462ca, such as an O-ring, at an outer diameter for sealing when closing the valve lower hole 460dc, and in this case, the sealing member 462ca may be provided between the first valve pin extended portion 462c and the valve lower hole 460dc.

The second valve pin extended portion 462b may be detachably combined to the valve pin rod 462a. The second valve pin extended portion 462b may prevent the valve spring 464 penetrated by the valve pin rod 462a from deviating from the valve pin rod 462a. The second valve pin extended portion 462b may be detachably combined to the valve pin rod 462a through a screw.

The valve spring 464 provides elastic restoring force for the valve pin 462 to close the valve lower hole 460dc and the valve through hole 460d, and may provide a degree of the elastic restoring force for the valve pin 462 to be moved by external force.

The valve spring 464 may be penetrated by the valve pin rod 462a. An upper portion of the valve spring 464 may be supported by the second valve pin extended portion 462b. A lower portion of the valve spring 464 may be supported by an upper surface 460ba of the first insertion portion 460b, an inner upper surface 460ca facing a lower surface of the second insertion portion 460c, or a support surface (not shown) extending inward from an inner circumferential surface of the valve through hole 460d.

In this case, when external force is applied to the top of the second valve pin extended portion 462b or the valve pin rod 462a, the valve pin rod 462a moves downward and the first valve pin extended portion 462c that was closing the valve lower hole 460dc opens the valve lower hole 460dc. The second insertion portion 460c is inserted into the gas cartridge 410, and thus, the compression gas inside the gas cartridge 410 is introduced to the valve through hole 460d through the valve lower hole 460c and is discharged to the valve discharge hole 460da.

The discharged compression gas is discharged to the discharge hole 426 through the first coupling hole 423 and the body cavity 422 of the opening or closing body 421. The compression gas discharged from the opening or closing body 421 is supplied to the airbag 300 communicating with the discharge hole 426 to expand the airbag 300.

The driving portion 450 may open or close the opening or closing valve 460. The driving portion 450 may be a motor or solenoid using electricity, or may be a gunpowder type actuator that explodes according to an electric signal.

The driving portion 450 may include a driving portion body 451, a driving portion insertion portion 454 extending from the driving portion body 451 and coupled to the second coupling hole 424, a signal transmitting line 453 for transmitting an expansion signal to the driving portion body 451, and a piston 452 that may enter from one end of the driving portion insertion portion 454 and extend in a length.

A gunpowder material explosible by an electric signal may be included in at least one of the driving portion body 451 and the driving portion insertion portion 454. The electric signal may be the airbag expansion signal. The driving portion insertion portion 454 may be inserted into the second coupling hole 424 to be detachably fixed and combined thereto, and may be combined to the second coupling hole 424 through a screw. The signal transmitting line 453 may induce an explosion by transmitting the electric signal corresponding to an expansion signal of the processor 2100 to the gunpowder material.

The piston 452 may extend from the driving portion insertion portion 454 by the expansion signal, and thus, a length of the piston 452 may be extended. In other words, the piston 452 maintains an inserted state inside the driving portion insertion portion 454, and is taken outside the driving portion insertion portion 454 when pushed by explosive power of the gunpowder material.

The piston 452 moves to an outside of the driving portion insertion portion 454 and applies external force to an upper portion of the valve pin 462. In this case, upon receiving external force, the valve pin 462 opens the valve through hole 460d and the valve lower hole 460dc, and the opening or closing valve 460 is opened, and thus, the compression gas may be supplied to the airbag 300 through the discharge hole 426.

Referring to FIG. 9, the reusable airbag inflator 400 according to an embodiment of the present disclosure may be installed at the drone structure 110 of the drone 100 or the outer covers 210 and 220 of the body protection device 200. In detail, the opening or closing portion 420 may be fixed and combined to the drone structure 110 or the outer covers 210 and 220 by using a fixing member, such as a bolt or an adhesive.

In this case, the drone structure 110 and the outer covers 210 and 220 may be directly installed on the fixing body combining surface 421a of the opening or closing body 421, excluding the fixing body 425. Alternatively, the drone structure 110 and the outer covers 210 and 220 may be arranged between the fixing body 425 and the fixing body combining surface 421a of the opening or closing body 421, and the fixing body 425 and the fixing body combining surface 421a may be combined by the fixing member 425a.

The inflator 400 may communicate with the inside of the airbag 300 by being indirectly connected to the airbag 300 through a hose 350. In detail, the opening or closing portion 420 may be indirectly connected to the airbag 300 through the hose 350. In the body protection device 200, the outer covers 210 and 220 may be combined to one surface of the opening or closing body 421 such that the discharge hole 426 of the opening or closing portion 420 and an outer cover hole 210a of the outer covers 210 and 220 communicate with each other. Alternatively, the outer covers 210 and 220 may be combined between one surface of the opening or closing body 421 and the fixing body 425 such that the discharge hole 426 of the opening or closing portion 420 and the outer cover hole 210a of the outer covers 210 and 220 communicate with each other. Also, one end of the hose 350 may be combined to be coupled to the discharge hole 426 of the opening or closing body 421, and the other end of the hose 350 may be combined by being coupled to an airbag hole 300a of the airbag 300.

Referring to FIG. 10, the reusable airbag inflator 400 according to an embodiment of the present disclosure may be directly installed at the airbag 300 of the drone 100 or the airbag 300 of the body protection device 200. In detail, the airbag 300 may be placed between the opening or closing body 421 of the opening or closing portion 420 and the fixing body 425, and the opening or closing body 421 and the fixing body 425 may be fixed and combined to each other by using the fixing member 425a, such as a bolt or an adhesive. In this case, the airbag 300 may be combined between one surface of the opening or closing body 421 and the fixing body 425 such that the airbag hole 300a of the airbag 300 and the discharge hole 426 of the opening or closing portion 420 communicate with each other.

On the other hand, the outer covers 210 and 220 may be placed between the opening or closing body 421 of the opening or closing portion 420 and the fixing body 425, and the opening or closing body 421 and the fixing body 425 may be fixed and combined to each other by using the fixing member 425a, such as a bolt or an adhesive. In this case, the outer covers 210 and 220 may be combined between one surface of the opening or closing body 421 and the fixing body 425 such that the discharge hole 426 of the opening or closing portion 420 and the outer cover hole 210a communicate with each other.

In addition, the outer covers 210 and 220 and the airbag 300 may be together placed between the opening or closing body 421 and the fixing body 425, and the opening or closing body 421 and the fixing body 425 may be fixed and combined to each other by using the fixing member 425a. The outer covers 210 and 220 and the airbag 300 may be combined together between one surface of the opening or closing body 421 and the fixing body 425 such that the outer cover hole 210a of the outer covers 210 and 220, the airbag hole 300a of the airbag 300, and the discharge hole 426 of the opening or closing portion 420 communicate with each other.

The inflator 400 may communicate with the inside of the airbag 300 by being directly combined with the airbag 300. The discharge hole 426 of the opening or closing body 421 may directly communicate with the inside of the airbag 300 through the airbag hole 300a of the airbag 300, and supply the compression gas to the airbag 300 within a short period of time without a decrease in a discharge speed of a gas compared to when the compression gas is supplied through the hose 350.

Hereinafter, a reusable airbag inflator according to another embodiment of the present disclosure will be described.

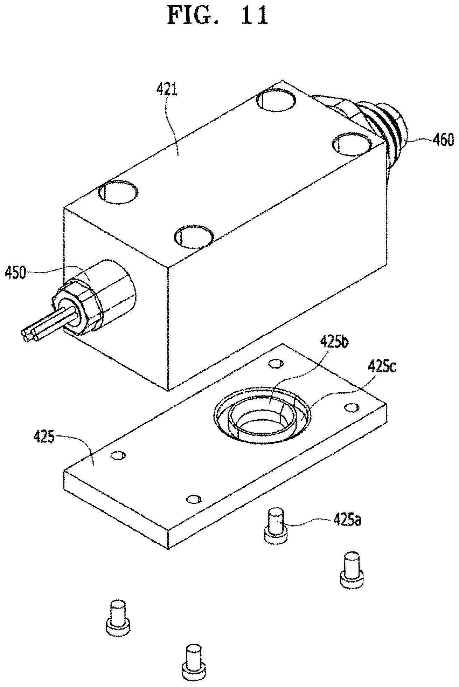

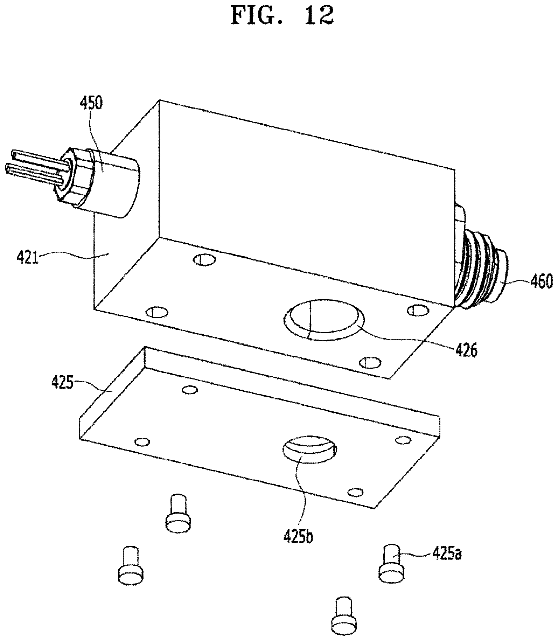

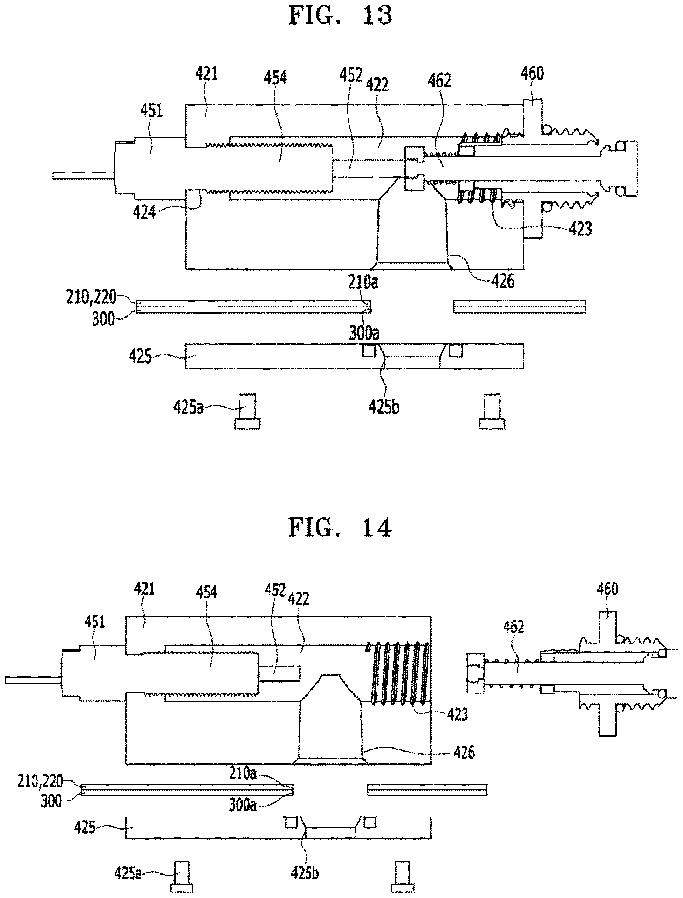

FIGS. 11 and 12 are perspective views of a reusable airbag inflator according to another embodiment of the present disclosure. FIG. 13 is a cross-sectional view of a reusable airbag inflator according to another embodiment of the present disclosure. FIG. 14 is an exploded cross-sectional view of a reusable airbag inflator according to another embodiment of the present disclosure.

Descriptions about the reusable airbag inflator 400 according to an embodiment of the present disclosure of FIGS. 4A to 10 may be applied to the reusable airbag inflator 400 according to another embodiment of the present disclosure of FIGS. 11 to 14 as they are. Hereinafter, redundant descriptions are omitted, and differences and additions are mainly described.

Referring to FIGS. 11 to 14, in the reusable airbag inflator 400 according to another embodiment of the present disclosure, the fixing body 425 may include a fixing body sealing accommodating portion 425c where a sealing member (not shown) for sealing between the fixing body discharge hole 425b and the discharge hole 426 of the opening or closing body 421 may be accommodated. The fixing body sealing accommodating portion 425c may be formed on a circumference of the fixing body discharge hole 425b, as a circular groove concave inside the fixing body 425.

The outer appearance of the opening or closing body 421 may have a rectangular parallelepiped shape. In this case, the first coupling hole 423 may be formed at a right portion (right surface) of the opening or closing body 421, the second coupling hole 424 may be formed at a left portion (left surface) of the opening or closing body 421, the discharge hole 426 may be formed at a lower portion (lower surface) of the opening or closing body 421, and the body cavity 422 may enable the first coupling hole 423, the second coupling hole 424, and the discharge hole 426 to communicate with each other inside the opening or closing body 421.

Hereinafter, a reusable airbag inflator according to another embodiment of the present disclosure will be described.

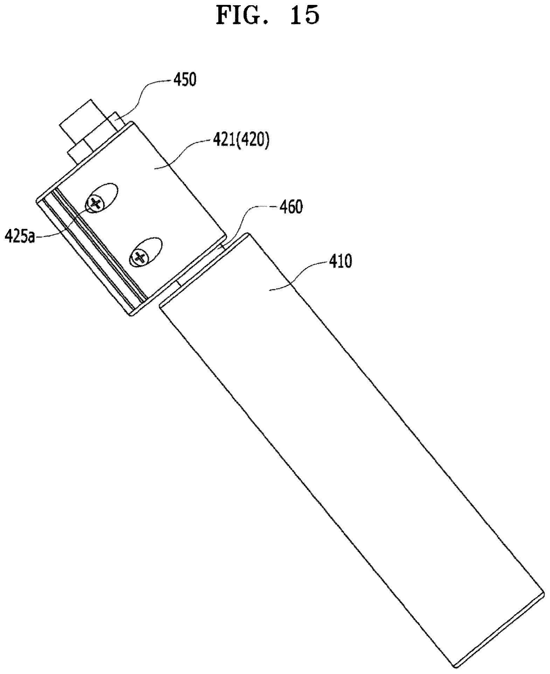

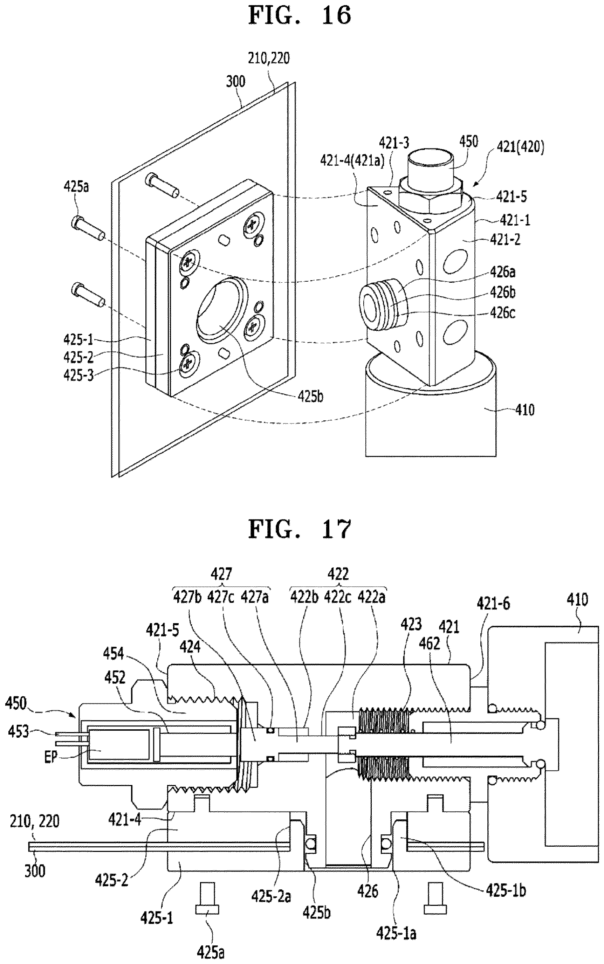

FIG. 15 is a perspective view of a reusable airbag inflator according to another embodiment of the present disclosure. FIG. 16 illustrates a state of assembling a reusable airbag inflator according to another embodiment of the present disclosure. FIG. 17 is a cross-sectional view of a reusable airbag inflator according to another embodiment of the present disclosure.

Descriptions about the reusable airbag inflator 400 according to an embodiment of the present disclosure of FIGS. 4A to 10 may be applied to the reusable airbag inflator 400 according to another embodiment of the present disclosure of FIGS. 15 to 17 as they are. Hereinafter, redundant descriptions are omitted, and differences and additions are mainly described.

Referring to FIGS. 15 and 16, the outer appearance of the opening or closing body 421 may have a triangular prism shape. In detail, the opening or closing body 421 having the triangular prism shape may include a curved surface 421-1 forming one side surface and fillet curve processed such that both sides of one vertex of a triangle meet in a curve, first and second slope surfaces 421-2 and 421-3 extending to both sides from the curved surface 421-1 and forming side surfaces according to the both sides of the triangle, a first flat surface 421-4 corresponding to the remaining one side of the triangle, connecting between the first and second slope surfaces 421-2 and 421-3 and forming one side surface of the triangular prism, and a second flat surface 421-5 and a third flat surface 421-6 respectively forming a top surface and a bottom surface.

In this case, the first coupling hole 423 may be formed on the third flat surface 421-6, the second coupling hole 424 may be formed on the second flat surface 421-5, the discharge hole 426 may be formed on the first flat surface 421-4, and the body cavity 422 may enable the first coupling hole 423, the second coupling hole 424, and the discharge hole 426 to communicate with each other inside the opening or closing body 421. The first flat surface 421-4 may correspond to the fixing body combining surface 421a of the embodiment described above.

The fixing body 425 may be detachably fixed and combined to the first flat surface 421-4 of the opening or closing body 421 by using the fixing member 425a. At least one of the outer covers 210 and 220 and the airbag 300 may be arranged between the fixing body 425 and the opening or closing body 421, and the fixing body 425 and the opening or closing body 421 may be fixed and combined to each other, thereby fixing at least one of the outer covers 210 and 220 and the airbag 300.

Also, according to various embodiments, the fixing body 425 may include a first fixing body 425-1, a second fixing body 425-2, and a fixing member 425-3 for fixing and combining the first and second fixing bodies 425-1 and 425-2 to each other. In this case, at least one of the outer covers 210 and 220 and the airbag 300 may be arranged between the first fixing body 425-1 and the second fixing body 425-2, and the first fixing body 425-1 and the second fixing body 425-2 are fixed to each other by using the fixing member 425-3, thereby fixing at least one of the outer covers 210 and 220 and the airbag 300 between the first fixing body 425-1 and the second fixing body 425-2.

The fixing body 425 may include the fixing body discharge hole 425b communicating with the inside of the airbag 300. The fixing body discharge hole 425b of the fixing body 425 may be formed by inserting a fixing body discharge extending protrusion 425-1b extending from a first fixing body discharge hole 425-1a formed in the first fixing body 425-1 to the second fixing body 425-2 to penetrate a second fixing body discharge hole 425-1a formed in the second fixing body 425-2.

The outer cover hole 210a formed in the outer covers 210 and 220 and the airbag hole 300a formed in the airbag 300 may communicate with the fixing body discharge hole 425b. The outer cover hole 210a and the airbag hole 300a may be penetrated by the fixing body discharge extending protrusion 425-1b.

The fixing body 425 maintains being installed in the outer covers 210 and 220 and the airbag 300, and the opening or closing body 421 may be detachably combined to the fixing body 425. Accordingly, after the inflator 400 is used, the opening or closing body 421 may be separated from the fixing body 425, and the driving portion 450 and the gas cartridge 410 installed in the opening or closing body 421 may be replaced, and thus, replacement and repair for reuse may be facilitated.

The opening or closing body 421 may include a discharge hole extending protrusion 426a extending from the fixing body combining surface 421a corresponding to the first flat surface 421-4 to the outside of the discharge hole 426, and an extending protrusion sealing accommodating portion 426c where a sealing member 426b located at a circumference of the discharge hole extending protrusion 426a is accommodated. The discharge hole extending protrusion 426a is inserted into the fixing body discharge hole 425b, and the sealing member 426b may press an inner circumferential surface of the fixing body discharge hole 425b (or an inner circumferential surface of the first fixing body discharge hole 425-1a) to prevent the compression gas from leaking.

Referring to FIG. 17, the body cavity 422 of the opening or closing body 421 may include a first body cavity 422a connected to the first coupling hole 423, a second body cavity 422b connected to the second coupling hole 424, and a third body cavity 422c connecting between the first body cavity 422a and the second body cavity 422b. The first body cavity 422a may be connected to the discharge hole 426.

The first body cavity 422a may have a greater diameter (cross-sectional area) than the second body cavity 422b. Also, the second body cavity 422b may have a greater diameter (cross-sectional area) than the third body cavity 422c.

The opening or closing body 421 may include an extending piston 427 movable inside the body cavity 422.

The extending piston 427 moves towards the opening or closing valve 460 inside the body cavity 422 upon receiving external force from the piston 452 taken out from the driving portion 450, and may open the opening or closing valve 460 by transmitting the external force to one end of the valve pin 462 of the opening or closing valve 460.

The extending piston 427 may include an extending piston protruding portion 427a that may move inside the first body cavity 422a and the third body cavity 422c and has an almost same inner diameter as the third body cavity 422c, an extending piston body portion 427b that is integrally connected to the extending piston protruding portion 427a and moves inside the second body cavity 422b, and a sealing member 427c provided on an outer circumference of the extending piston body portion 427b and sealing between the second body cavity 422b.

The extending piston body portion 427b may have a greater diameter than the extending piston protruding portion 427a, and thus, even when the extending piston body portion 427b is moved by the piston 452 of the driving portion 450, movement of the extending piston body portion 427b may be restricted by the third body cavity 422c.

According to the present disclosure, even when the opening or closing valve 460 is opened by the extending piston 427 and the compression gas is introduced to the first body cavity 422a, the compression gas is prevented from being introduced to the second body cavity 422b by the extending piston protruding portion 427a penetrating the third body cavity 422c, and even when the compression gas is partially introduced, the compression gas may not reach the driving portion 450 by the sealing member 427c.

The present disclosure has been described with reference to the embodiments shown in the drawings, but the embodiments are only examples and it would be understood by one of ordinary skill in the art that various modifications and equivalent embodiments are possible. Accordingly, the scope of the present disclosure will be defined by the appended claims.

## Claims

1. A reusable airbag inflator comprising:
a gas cartridge mounted with an opening or closing valve capable of being opened or closed to discharge a compression gas stored therein;
a driving portion for opening or closing the opening or closing valve; and
an opening or closing body including a first coupling hole where the opening or closing valve is installed, a second coupling hole where the driving portion is installed, a discharge hole through which the compression gas is discharged to an airbag, and a body cavity connecting the first coupling hole, the second coupling hole, and the discharge hole,
wherein the opening or closing valve is a check valve that is opened when external force greater than internal pressure of the gas cartridge is received and closed when the external force is removed.

2. The reusable airbag inflator of claim 1, wherein the opening or closing valve is detachably installed in the gas cartridge and the opening or closing body.

3. The reusable airbag inflator of claim 1, wherein the driving portion is detachably installed in the opening or closing body.

4. The reusable airbag inflator of claim 1, further comprising a fixing body that includes a fixing body discharge hole communicating with the discharge hole and is combinable to the opening or closing body, wherein the airbag is installed between the opening or closing body and the fixing body or installed in the fixing body to communicate with the discharge hole and the fixing body discharge hole.

5. The reusable airbag inflator of claim 1, wherein the external force applied to the opening or closing valve is generated by a piston extractable from the driving portion.

6. The reusable airbag inflator of claim 1, wherein the first coupling hole and the second coupling hole are arranged to face each other, and the discharge hole is arranged between the first coupling hole and the second coupling hole.
